(19) Europäisches Patentamt
European Patent Office
Office européen des brevets

(11) **EP 4 682 669 A1**

(12) **EUROPEAN PATENT APPLICATION**
published in accordance with Art. 153(4) EPC

(43) Date of publication:
**21.01.2026   Bulletin 2026/04**

(21) Application number: **23927513.4**

(22) Date of filing: **16.03.2023**

(51) International Patent Classification (IPC):
**G05F 1/70** (2006.01)      **H02M 7/48** (2007.01)
**H02M 7/49** (2007.01)

(52) Cooperative Patent Classification (CPC):
**G05F 1/70; H02M 7/48; H02M 7/49**

(86) International application number:
**PCT/JP2023/010304**

(87) International publication number:
**WO 2024/189894 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Mitsubishi Electric Corporation**
**Tokyo 100-8310 (JP)**
• **TMEIC Corporation**
**Tokyo 104-0031 (JP)**

(72) Inventors:
• **HAMANAKA, Kota**
**Tokyo 100-8310 (JP)**

• **TANAKA, Miwako**
**Tokyo 100-8310 (JP)**
• **MUKUNOKI, Kaho**
**Tokyo 100-8310 (JP)**
• **FUJII, Toshiyuki**
**Tokyo 100-8310 (JP)**
• **OKUYAMA, Ryota**
**Tokyo 104-0031 (JP)**
• **KONDO, Kenichi**
**Tokyo 104-0031 (JP)**

(74) Representative: **Witte, Weller & Partner**
**Patentanwälte mbB**
**Postfach 10 54 62**
**70047 Stuttgart (DE)**

(54) **POWER CONVERSION DEVICE**

(57)     In a control device (3) for an MMC type power conversion device, an AC voltage control unit (24) computes a positive-sequence reactive current command value (Id*) based on a detection value of an AC voltage of an AC power system. A DC voltage control unit (20) computes a positive-sequence active current command value (Iq*) based on a representative value of voltages of power storage elements in converter cells which implement a power converter. A negative-sequence current command value computing unit (22) computes a negative-sequence current command value (Idn*, Iqn*) for suppression of imbalance among the voltages of the power storage elements among a plurality of arms. An output current control unit (25) controls an AC current of the AC power system based on the positive-sequence reactive current command value (Id*), the positive-sequence active current command value (Iq*), and the negative-sequence current command value (Idn*, Iqn*). The output current control unit (25) restricts a positive-sequence reactive current (Id) when magnitude of arm currents that flow through the plurality of arms, respectively, is equal to or larger than an allowable current maximum value.

FIG.4

**Description**

TECHNICAL FIELD

The present disclosure relates to a power conversion device.

BACKGROUND ART

A modular multilevel converter (MMC) in which a plurality of unit converters (which are referred to as "converter cells" below) are cascaded has been known as a large-capacity power conversion device provided in a power system. Each converter cell includes a plurality of semiconductor switching elements and a power storage element (representatively, a capacitor). Each converter cell outputs a voltage across opposing ends of the capacitor and a zero voltage by turning on and turning off the semiconductor switching elements.

In the MMC, in order to obtain desired control output, a voltage of the power storage element (that is, a capacitor voltage) in an individual converter cell should be maintained around a target value. Voltages of capacitors, however, may be imbalanced among phases due to variation in voltage among the capacitors. When capacitor voltages become imbalanced among the phases, there is a concern about deterioration of control characteristics of the MMC due to generation or the like of an unintended circulating current. Therefore, it is important to control phase balance of the capacitor voltages for suppression of this imbalance.

An overloaded state of the MMC refers to excessive increase in capacitor voltage to a level at which a function for protection against overvoltage is activated or lowering in capacitor voltage to a level at which a function for protection against a low voltage is activated or excessive lowering in capacitor voltage in any converter cell included in the MMC. If the MMC is overloaded, the above function for protection is activated and consequently the MMC may stop operating.

A reactive power compensation device provided for stabilization of a power system is required to keep outputting reactive power even in the event of a system fault. In the reactive power compensation device including the MMC as well, in the event of the system fault, overload of the MMC should be prevented and output of reactive power should continue.

For example, PTL 1 (WO2022/085101) discloses a configuration for preventing an operation of an MMC-type reactive power compensation device from being stopped for protection against overvoltage or overcurrent. In the reactive power compensation device specifically disclosed in this literature, "the converter control unit is provided with an AC voltage detector and an output limit unit. The AC voltage detector detects voltage information about the AC power system to which the power converter is connected. The output limit unit determines whether or not restriction on the output reactive power of the power converter is necessary, on the basis of the voltage information detected by the AC voltage detector, and restricts the output reactive power of the power converter when restriction on the output reactive power is necessary" (see Abstract of PTL 1).

CITATION LIST

PATENT LITERATURE

PTL 1: WO2022/085101

SUMMARY OF INVENTION

TECHNICAL PROBLEM

The reactive power compensation device disclosed in PTL 1 can effectively prevent the MMC from stopping operating for protection against overvoltage or overcurrent when an imbalance factor of a system voltage becomes high due to a system fault. Even when the MMC enters an overloaded operation state while the imbalance factor of the system voltage is low, however, output reactive power is not restricted. Therefore, protection against overvoltage or protection against a low voltage may function to stop operations of the MMC.

The present disclosure was made in consideration of problems above, and one of objects thereof is to provide a power conversion device that can reliably be prevented from stopping operating for protection against overvoltage and a low voltage originating from an overloaded state.

SOLUTION TO PROBLEM

A power conversion device in one embodiment is connected to an alternating-current (AC) power system and includes a power converter including a plurality of arms and a control device to control the power converter. Each of the arms includes a plurality of cascaded converter cells. Each of the converter cells includes a pair of input and output terminals, a plurality of semiconductor switching elements, and a power storage element connected to the pair of input and output terminals with the plurality of semiconductor switching elements being interposed. The control device includes an AC voltage control unit, a direct-current (DC) voltage control unit, a phase balance control unit, a first negative-sequence current command value computing unit, and an output current control unit. The AC voltage control unit computes a positive-sequence reactive current command value based on a detection value of an AC voltage of the AC power system. The DC voltage control unit computes a positive-sequence active current command value based on a representative value of voltages of power storage elements in the converter cells which implement the power converter. The phase balance control unit generates respective arm current command values for the plurality of arms for suppression of imbalance among the voltages of the power storage elements among the plurality of arms. The first negative-sequence current command value computing unit computes a first negative-sequence reactive current command value and a first negative-sequence active current command value based on the arm current command values. The output current control unit controls an AC current of the AC power system based on the positive-sequence reactive current command value, the positive-sequence active current command value, the first negative-sequence reactive current command value, and the first negative-sequence active current command value. When magnitude of arm currents that flow through the plurality of arms, respectively, is equal to or larger than an allowable current maximum value, the output current control unit restricts a positive-sequence reactive current, as compared with the positive-sequence reactive current when magnitude of the arm currents is smaller than the allowable current maximum value.

ADVANTAGEOUS EFFECTS OF INVENTION

According to the embodiment, the power conversion device that can reliably be prevented from stopping operating for protection against the overvoltage and the low voltage originating from the overloaded state by restriction of magnitude of the positive-sequence reactive current command value when magnitude of the arm currents is equal to or larger than the allowable current maximum value can be provided.

BRIEF DESCRIPTION OF DRAWINGS

Fig. 1 is a schematic configuration diagram of a power conversion device according to a first embodiment.
Fig. 2 is a circuit diagram showing a configuration of a half-bridge converter cell.
Fig. 3 is a circuit diagram showing a configuration of a full-bridge converter cell.
Fig. 4 is a block diagram showing a schematic configuration of a control device in Fig. 1.
Fig. 5 is a block diagram showing an exemplary configuration of a DC voltage control unit in Fig. 4.
Fig. 6 is a block diagram showing an exemplary configuration of a phase balance control unit in Fig. 4.
Fig. 7 is a block diagram showing an exemplary configuration of a negative-sequence current command value computing unit in Fig. 4.
Fig. 8 is a block diagram showing an exemplary configuration of a circulating current control unit in Fig. 4.
Fig. 9 is a block diagram showing an exemplary configuration of an AC voltage control unit in Fig. 4.
Fig. 10 is a block diagram showing an exemplary configuration of an output current control unit in Fig. 4.
Fig. 11 is a block diagram showing an exemplary configuration of a control device in a power conversion device in a second embodiment.
Fig. 12 is a block diagram showing an exemplary configuration of a negative-sequence current command value computing unit for negative-sequence voltage compensation shown in Fig. 11.
Fig. 13 is a block diagram showing an exemplary configuration of an output current control unit in Fig. 11.

DESCRIPTION OF EMBODIMENTS

Each embodiment will be described in detail below with reference to the drawings. The same or corresponding elements have the same reference characters allotted and description thereof may not be repeated. Though a reactive power compensation device will be described by way of example in the description below, an MMC type power conversion device in the present disclosure is applicable also to high voltage direct current (HVDC).

First Embodiment.

[Schematic Configuration of Three-Phase Delta-Connected MMC Type Power Conversion Device]

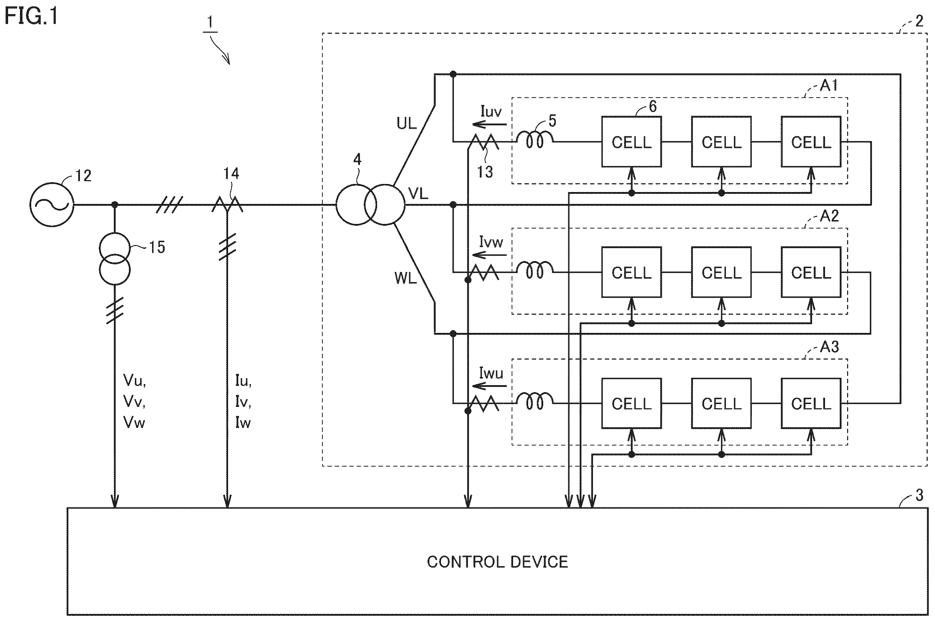

Fig. 1 is a schematic configuration diagram of a power conversion device 1 according to a first embodiment. Power conversion device 1 includes a delta-connected cascaded three-phase MMC type power converter 2 and a control device 3 therefor.

Power converter 2 includes a transformer 4 and three-phase AC lines UL, VL, and WL. A primary winding of transformer 4 is connected to power transmission lines of a U phase, a V phase, and a W phase of an AC power system 12. A secondary winding of transformer 4 is connected to first terminals of AC lines UL, VL, and WL.

Power converter 2 functions as a reactive power compensation device to inject or absorb reactive power into or from AC power system 12 with transformer 4 being interposed. Specifically, when a three-phase AC voltage (which is also referred to as a "system voltage" below) of AC power system 12 becomes low, power converter 2 injects reactive power into AC power system 12 to increase the system voltage. When the system voltage becomes high, on the other hand, power converter 2 absorbs reactive power from AC power system 12 to lower the system voltage. In other words, power converter 2 can compensate for reactive power by injection or absorption of a current orthogonal to the system voltage into or from AC power system 12.

Power converter 2 further includes arms A1 to A3. Arm A1 is connected between a second terminal of AC line UL of the U phase and a second terminal of AC line VL of the V phase. Arm A2 is connected between the second terminal of AC line VL of the V phase and a second terminal of AC line WL of the W phase. Arm A3 is connected between the second terminal of AC line WL of the W phase and the second terminal of AC line UL of the U phase. In other words, arms A1 to A3 are connected by delta connection.

Arms A1 to A3 may be connected by star connection. In this case, arm A1 is connected between the second terminal of AC line UL of the U phase and a common neutral point. Arm A2 is connected between the second terminal of AC line VL of the V phase and the common neutral point. Arm A3 is connected between the second terminal of AC line WL of the W phase and the common neutral point.

Each of arms A1 to A3 includes a reactor 5 and N (N being an integer equal to or larger than 2) converter cells 6. Therefore, power converter 2 includes 3N converter cells 6 in total. An example in Fig. 1 illustrates a case of N = 3. N converter cells 6 are connected in series. In order to suppress a circulating current that flows through delta connection, reactor 5 is connected in series to N converter cells 6 in each of arms (A1 to A3).

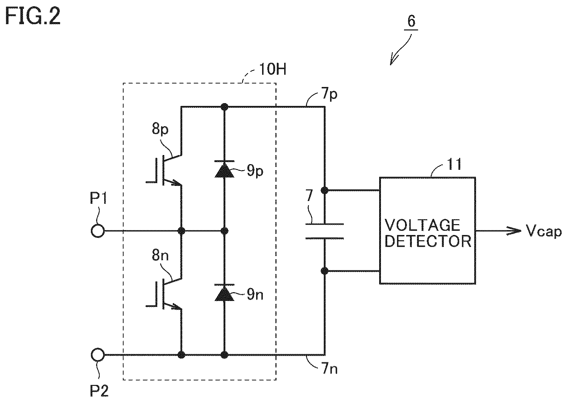

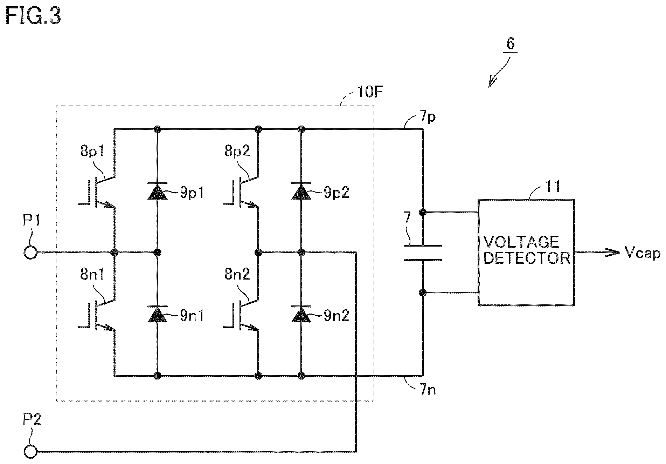

Each of the plurality of converter cells 6 bidirectionally converts electric power in accordance with a control signal from control device 3. An exemplary configuration of converter cell 6 will be described later with reference to Figs. 2 and 3.

Power conversion device 1 further includes an arm current detector 13 arranged in each of the arms (A1 to A3) and an AC current detector 14 and an AC voltage detector 15 arranged in AC power system 12.

Arm current detectors 13 detect a current Iuv that flows through arm A1, a current Ivw that flows through arm A2, and a current Iwu that flows through arm A3, respectively. AC current detector 14 detects a U-phase AC current Iu, a V-phase AC current Iv, and a W-phase AC current Iw in AC power system 12. AC voltage detector 15 detects a U-phase AC voltage Vu, a V-phase AC voltage Vv, and a W-phase AC voltage Vw of AC power system 12. Signals representing these detected currents and voltages are inputted to control device 3.

[Exemplary Configuration of Converter Cell 6]

An exemplary configuration of converter cell 6 will be described below with reference to Figs. 2 and 3. Fig. 2 shows an exemplary half-bridge configuration and Fig. 3 shows an exemplary full-bridge configuration. A configuration other than those in Figs. 2 and 3 may be applicable as the configuration of converter cell 6.

Fig. 2 is a circuit diagram showing a configuration of a half-bridge converter cell 6. Converter cell 6 in Fig. 2 includes a series body formed by connection in series of two semiconductor switching elements 8p and 8n, rectification elements 9p and 9n (typically diodes), a power storage element 7 (typically a capacitor), a voltage detector 11, and input and output terminals P1 and P2.

Rectification elements 9p and 9n are connected in anti-parallel (that is, in parallel and in a direction of reverse bias) to semiconductor switching elements 8p and 8n. The series body of semiconductor switching elements 8p and 8n and power storage element 7 are connected in parallel. Voltage detector 11 detects a voltage Vcap (which is also referred to as a capacitor voltage Vcap) across opposing ends of power storage element 7.

The series body of semiconductor switching elements 8p and 8n and rectification elements 9p and 9n implement a half-bridge circuit 10H. Opposing terminals of semiconductor switching element 8n are connected to input and output terminals P1 and P2, respectively. Therefore, power storage element 7 is connected to input and output terminals P1 and P2 with half-bridge circuit 10H being interposed.

Converter cell 6 outputs voltage Vcap of power storage element 7 or a zero voltage across input and output terminals P1 and P2 as a result of switching operations by semiconductor switching elements 8p and 8n. When semiconductor switching element 8p is turned on and semiconductor switching element 8n is turned off, converter cell 6 outputs voltage Vcap of power storage element 7. When semiconductor switching element 8p is turned off and semiconductor switching element 8n is turned on, converter cell 6 outputs the zero voltage.

Opposing terminals of semiconductor switching element 8p may be connected to input and output terminals P1 and P2, respectively. In this case again, as a result of on and off operations by semiconductor switching elements 8p and 8n, converter cell 6 outputs voltage Vcap of power storage element 7 and the zero voltage from input and output terminals P1 and P2.

Fig. 3 is a circuit diagram showing a configuration of a full-bridge converter cell 6. Converter cell 6 in Fig. 3 includes a first series body formed by connection in series of two semiconductor switching elements 8p1 and 8n1, a second series body formed by connection in series of two semiconductor switching elements 8p2 and 8n2, rectification elements 9p1, 9n1, 9p2, and 9n2, power storage element 7, voltage detector 11, and input and output terminals P1 and P2.

The first series body, the second series body, and power storage element 7 are connected in parallel. Rectification elements 9p1 and 9n1 are connected in anti-parallel to semiconductor switching elements 8p1 and 8n1, respectively. Rectification elements 9p2 and 9n2 are connected in anti-parallel to semiconductor switching elements 8p2 and 8n2, respectively. Semiconductor switching elements 8p1, 8n1, 8p2, and 8n2 and rectification elements 9p1, 9n1, 9p2, and 9n2 implement a full-bridge circuit 10F. Voltage detector 11 detects voltage Vcap across opposing ends of power storage element 7.

A point intermediate between semiconductor switching element 8p1 and semiconductor switching element 8n1 is connected to input and output terminal P1. Similarly, a point intermediate between semiconductor switching element 8p2 and semiconductor switching element 8n2 is connected to input and output terminal P2. Therefore, power storage element 7 is connected to input and output terminals P1 and P2 with full-bridge circuit 10F being interposed. Converter cell 6 outputs voltage Vcap or -Vcap of power storage element 7 or the zero voltage across input and output terminals P1 and P2 as a result of the switching operations by semiconductor switching elements 8p1, 8n1, 8p2, and 8n2.

In Figs. 2 and 3, semiconductor switching elements 8p, 8n, 8p1, 8n1, 8p2, and 8n2 are each implemented, for example, by a self-extinguishing semiconductor switching element such as an insulated gate bipolar transistor (IGBT) or a gate commutated turn-off (GCT) thyristor.

In the description below, when the semiconductor switching elements are collectively referred to or any one of them is referred to, denotation as semiconductor switching element 8 is given. When the rectification elements are collectively referred to or any one of them is referred to, denotation as rectification element 9 is given.

As shown in Fig. 1, converter cells 6 are cascaded. Therefore, in each of Figs. 2 and 3, input and output terminal P1 is connected to input and output terminal P2 of one of adjacent converter cells 6 or to the second terminal of one corresponding AC line. Input and output terminal P2 is connected to input and output terminal P1 of the other of adjacent converter cells 6 or the second terminal of the other corresponding AC line.

[Schematic Configuration of Control Device]

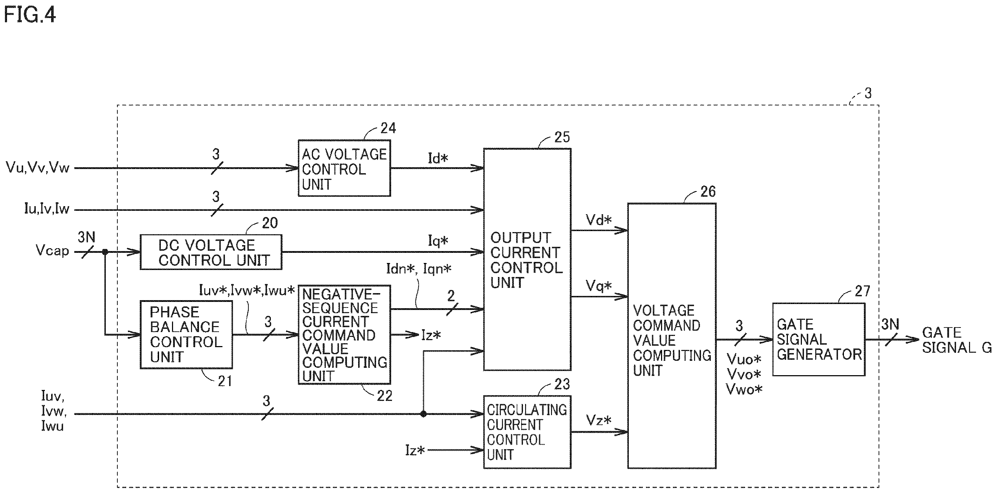

Fig. 4 is a block diagram showing a schematic configuration of control device 3 in Fig. 1. As shown in Fig. 4, control device 3 includes a DC voltage control unit 20, a phase balance control unit 21, a negative-sequence current command value computing unit 22, a circulating current control unit 23, an AC voltage control unit 24, an output current control unit 25, a voltage command value computing unit 26, and a gate signal generator 27. More detailed configuration and operation of these constituent elements will sequentially be described below.

Control device 3 can be implemented based on at least one computer including at least one central processing unit (CPU) and at least one memory. Alternatively, at least a part of control device 3 can also be implemented by dedicated circuitry such as a programmable logic device (PLD) such as a field programmable gate array (FPGA) and an application specific integrated circuit (ASIC).

[DC Voltage Control Unit 20]

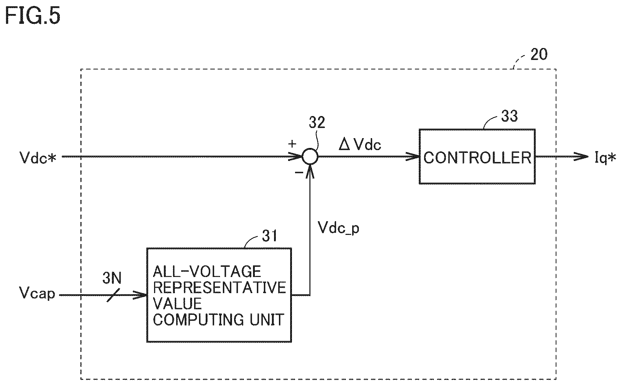

Fig. 5 is a block diagram showing an exemplary configuration of DC voltage control unit 20 in Fig. 4. Referring to Fig. 5, DC voltage control unit 20 includes an all-voltage representative value computing unit 31, a subtractor 32, and a controller 33. Capacitor voltages Vcap of all (3N here) converter cells 6 each of which is detected by voltage detector 11 for each converter cell 6 and a DC all-voltage command value Vdc* are inputted to DC voltage control unit 20.

All-voltage representative value computing unit 31 computes an all-voltage representative value Vdc_p representing all capacitor voltages Vcap from capacitor voltages Vcap of all converter cells 6. All-voltage representative value Vdc_p may be an average value or a median value of capacitor voltages of at least some of all converter cells 6, and it is not particularly limited so long as it reflects magnitude of capacitor voltages Vcap of all converter cells 6.

Subtractor 32 computes a difference ΔVdc by subtracting all-voltage representative value Vdc_p computed by all-voltage representative value computing unit 31 from DC all-voltage command value Vdc*.

Controller 33 generates a positive-sequence active current command value Iq* by performing feedback control computation for setting difference ΔVdc calculated by subtractor 32 to zero. A PI controller to add a result of execution of proportional computation (P) and integration computation (I) or another controller may be employed as controller 33.

In the present disclosure, a direction of a voltage vector is defined as a q axis, an active power component is represented by a q-axis component, and a reactive power component is represented by a d-axis component.

[Phase Balance Control Unit 21]

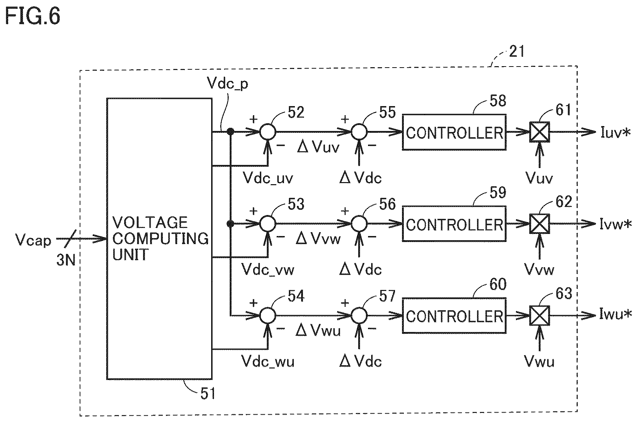

Fig. 6 is a block diagram showing an exemplary configuration of phase balance control unit 21 in Fig. 4. Referring to Fig. 6, phase balance control unit 21 includes a voltage computing unit 51, subtractors 52 to 57, controllers 58 to 60, and multipliers 61 to 63.

Phase balance control unit 21 receives input of detection values of capacitor voltages Vcap of all converter cells 6 detected by voltage detectors 11. Phase balance control unit 21 generates arm current command values Iuv*, Ivw*, and Iwu* for balancing capacitor voltages Vcap of converter cells 6 among phases, based on the detection values of all capacitor voltages Vcap.

Specifically, voltage computing unit 51 computes all-voltage representative value Vdc_p, a UV-phase voltage representative value Vdc_uv, a VW-phase voltage representative value Vdc_vw, and a WU-phase voltage representative value Vdc_wu based on the detection values of capacitor voltages Vcap of all converter cells 6.

The all-voltage representative value refers to a representative value of capacitor voltages Vcap of all converter cells 6. UV-phase voltage representative value Vdc_uv is a representative value of capacitor voltages Vcap of converter cells 6 included in arm A1. VW-phase voltage representative value Vdc_vw is a representative value of capacitor voltages Vcap of converter cells 6 included in arm A2. WU-phase voltage representative value Vdc_wu is a representative value of capacitor voltages Vcap of converter cells 6 included in arm A3. These representative values are not particularly limited so long as they reflect magnitude of capacitor voltages Vcap of corresponding converter cells 6 and they may each be, for example, an average value, a median value, or the like of capacitor voltages Vcap of at least some of corresponding converter cells 6.

Subtractor 52 calculates a difference ΔVuv between all-voltage representative value Vdc_p and UV-phase voltage representative value Vdc_uv. Subtractor 53 calculates a difference ΔVvw between all-voltage representative value Vdc_p and VW-phase voltage representative value Vdc_vw. Subtractor 54 calculates a difference ΔVwu between all-voltage representative value Vdc_p and WU-phase voltage representative value Vdc_wu.

Subtractor 55 subtracts a difference ΔVdc between DC voltage command value Vdc* and all-voltage representative value Vdc_p from difference ΔVuv. Subtractor 56 subtracts difference ΔVdc from difference ΔVvw. Subtractor 57 subtracts difference ΔVdc from difference ΔVwu. A zero-sequence component which is a component common among the phases is removed from each of differences ΔVuv, ΔVvw, and ΔVwu.

Controller 58 performs feedback control computation to set difference ΔVuv-ΔVdc calculated by subtractor 55 to zero. Controller 58 may be a PI controller or another controller. Similarly, controller 59 performs feedback control computation to set difference ΔVvw-ΔVdc calculated by subtractor 56 to zero. Controller 60 performs feedback control computation to set difference ΔVwu-ΔVdc calculated by subtractor 57 to zero. Controllers 59 and 60 may also each be a PI controller or another controller.

Multiplier 61 calculates a UV-phase arm current command value Iuv* by multiplying output from controller 58 by an arm voltage Vuv. Multiplier 62 calculates a VW-phase arm current command value Ivw* by multiplying output from controller 59 by an arm voltage Vvw. Multiplier 63 calculates a WU-phase arm current command value Iwu* by multiplying output from controller 60 by an arm voltage Vwu. Phase balance control unit 21 outputs arm current command values Iuv*, Ivw*, and Iwu* generated as above to negative-sequence current command value computing unit 22.

[Negative-Sequence Current Command Value Computing Unit 22]

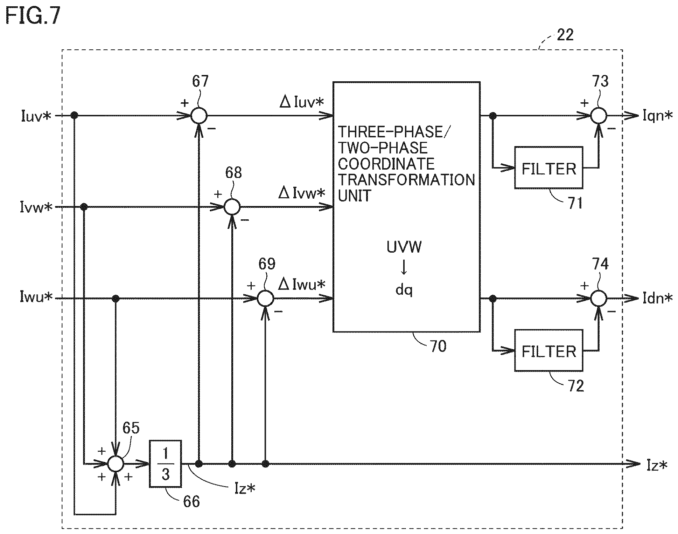

Fig. 7 is a block diagram showing an exemplary configuration of negative-sequence current command value computing unit 22 in Fig. 4. Referring to Fig. 7, negative-sequence current command value computing unit 22 includes an adder 65, a constant multiplier 66, subtractors 67 to 69, a three-phase/two-phase coordinate transformation unit 70, filters 71 and 72, and subtractors 73 and 74.

Negative-sequence current command value computing unit 22 generates negative-sequence current command values Idn* and Iqn* by extracting negative-sequence current components contained in arm current command values Iuv*, Ivw*, and Iwu* outputted from phase balance control unit 21. An operation by each constituent element of negative-sequence current command value computing unit 22 will be described below.

Adder 65 adds arm current command values Iuv*, Ivw*, and Iwu*. Constant multiplier 66 calculates a circulating current command value Iz* by multiplying a result of addition by adder 65 by 1/3.

Subtractor 67 calculates a difference ΔIuv* by subtracting circulating current command value Iz* from UV-phase arm current command value Iuv*. Subtractor 68 calculates a difference ΔIvw* by subtracting circulating current command value Iz* from VW-phase arm current command value Ivw*. Subtractor 69 calculates a difference ΔIwu* by subtracting circulating current command value Iz* from WU-phase arm current command value Iwu*. A positive-sequence component and a negative-sequence component are thus extracted from each of arm current command values Iuv*, Ivw*, and Iwu*.

Three-phase/two-phase coordinate transformation unit 70 performs three-phase/two-phase conversion of the extracted positive-sequence component and negative-sequence component (that is, differences ΔIuv*, ΔIvw*, and ΔIwu*) on a positive-sequence coordinate system. Specifically, three-phase/two-phase coordinate transformation unit 70 performs three-phase/two-phase conversion of differences ΔIuv*, ΔIvw*, and ΔIwu* from a UVW coordinate to an αβ coordinate, and further performs rotation coordinate transformation from the αβ coordinate to a positive-sequence dq coordinate by using a reference phase 0.

Reference phase θ refers to a phase θ in synchronization with a system voltage, and a phase locked loop (PLL) (not shown) extracts the same from detection values of system voltages Vu, Vv. and Vw. Transformation matrices for three-phase/two-phase conversion and rotation coordinate transformation are similar to transformation matrices for expressions (4A) and (4B) which will be described later, respectively.

Filters 71 and 72 extract the positive-sequence component from output from three-phase/two-phase coordinate transformation unit 70. Specifically, filters 71 and 72 are configured to remove the negative-sequence component from input values inputted thereto and to extract the positive-sequence component. On the positive-sequence coordinate system, the positive-sequence component is a DC component and the negative-sequence component is a component (2f) having a frequency two times as high as a fundamental frequency. Therefore, a primary delay filter, a 2f moving average filter, a 2f notch filter, and the like are employed as filters 71 and 72.

Subtractor 73 generates negative-sequence active current command value Iqn* by subtracting output (that is, the positive-sequence component) from filter 71 from a q-axis component outputted from three-phase/two-phase coordinate transformation unit 70. Subtractor 74 generates negative-sequence reactive current command value Idn* by subtracting output (that is, the positive-sequence component) from filter 72 from a d-axis component outputted from three-phase/two-phase coordinate transformation unit 70. Negative-sequence current command value computing unit 22 outputs negative-sequence current command values Iqn* and Idn* generated as set forth above to output current control unit 25 and outputs circulating current command value Iz* to circulating current control unit 23.

[Circulating Current Control Unit 23]

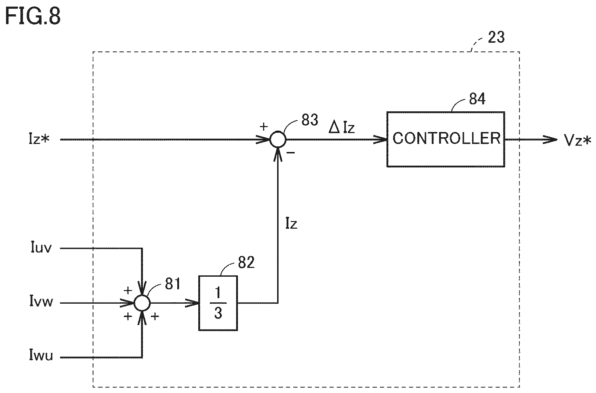

Fig. 8 is a block diagram showing an exemplary configuration of circulating current control unit 23 in Fig. 4. As shown in Fig. 8, circulating current control unit 23 includes an adder 81, a constant multiplier 82, a subtractor 83, and a controller 84. Operations by these constituent elements will be described below.

Adder 81 adds arm current values Iuv, Ivw, and Iwu detected by arm current detectors 13. Constant multiplier 82 computes a circulating current Iz by multiplying output from adder 81 by 1/3.

Subtractor 83 computes a difference ΔIz between circulating current command value Iz* and circulating current Iz. Controller 84 generates a zero-sequence voltage command value Vz* by performing control computation to set this difference ΔIz to zero, that is, to have circulating current Iz follow circulating current command value Iz*. Controller 84 may be a PI controller or another controller.

[AC Voltage Control Unit 24]

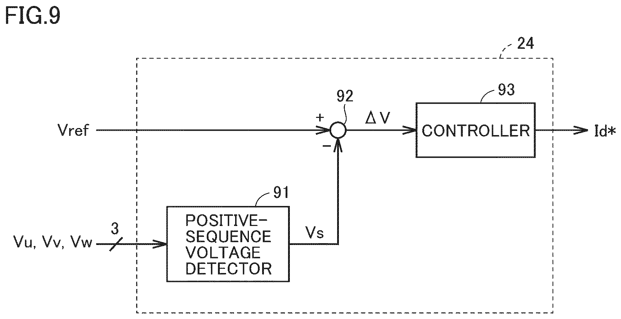

Fig. 9 is a block diagram showing an exemplary configuration of AC voltage control unit 24 in Fig. 4. As shown in Fig. 9, AC voltage control unit 24 includes a positive-sequence voltage detector 91, a subtractor 92, and a controller 93. A voltage command value Vref (that is, a command value for a voltage effective value) of power conversion device 1 and detection values of system voltages Vu, Vv, and Vw detected by AC voltage detector 15 are inputted to AC voltage control unit 24.

Positive-sequence voltage detector 91 calculates a positive-sequence voltage Vs from system voltages Vu, Vv, and Vw detected by AC voltage detector 15. AC power system 12 is configured with three phases of the U phase, the V phase, and the W phase. With instantaneous voltages being denoted as Vu, Vv, and Vw, positive-sequence voltage detector 91 calculates positive-sequence voltage Vs based on the following expression (1).

[Math. 1]

$$Vs = \sqrt{Vu^2 + Vv^2 + Vw^2} \qquad \cdots(1)$$

Subtractor 92 calculates a difference ΔV by subtracting positive-sequence voltage Vs calculated by positive-sequence voltage detector 91 from voltage command value Vref, and inputs calculated difference ΔV to controller 93. Controller 93 computes positive-sequence reactive current command value Id* by performing feedback control computation for setting inputted difference ΔV to zero. Controller 93 may be implemented, for example, by a PI controller or another controller.

[Output Current Control Unit 25]

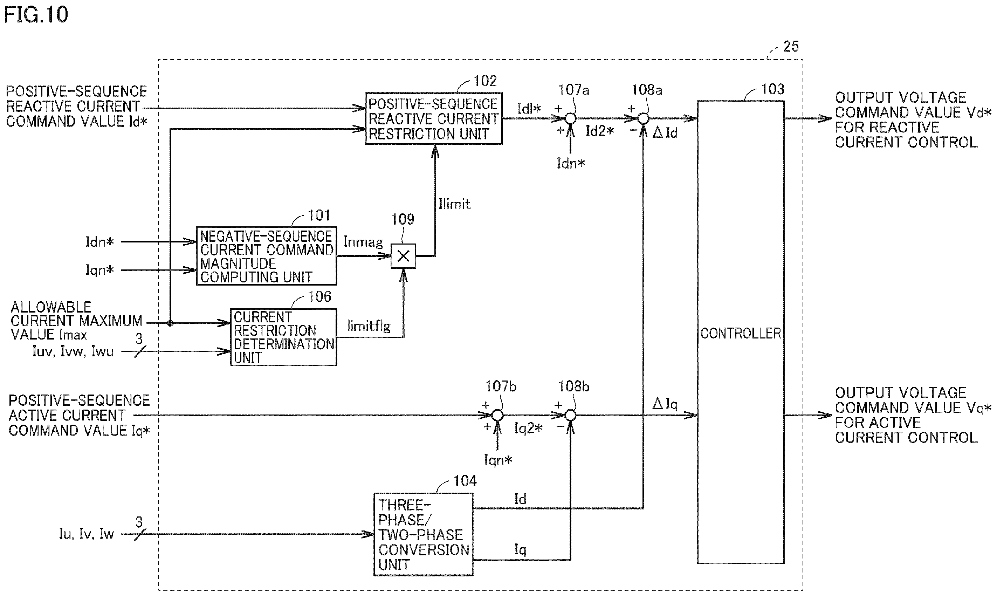

Fig. 10 is a block diagram showing an exemplary configuration of output current control unit 25 in Fig. 4. Referring to Fig. 10, output current control unit 25 includes a negative-sequence current command magnitude computing unit 101, a positive-sequence reactive current restriction unit 102, a controller 103, a three-phase/two-phase coordinate transformation unit 104, a current restriction determination unit 106, addition units 107a and 107b, subtraction units 108a and 108b, and a multiplication unit 109. Operations of these constituent elements will sequentially be described below.

Negative-sequence reactive current command value Idn* and negative-sequence active current command value Iqn* for phase balancing outputted from negative-sequence current command value computing unit 22 are inputted to negative-sequence current command magnitude computing unit 101. Magnitude computing unit 101 computes magnitude Inmag of the negative-sequence current command value in accordance with the following expression (2), based on these values.

[Math. 2]

$$\text{Inmag} = \sqrt{\text{Idn}*^2 + \text{Iqn}*^2} \qquad \cdots(2)$$

Arm currents Iuv, Ivw, and Iwu detected by arm current detectors 13 and an allowable current maximum value Imax are inputted to current restriction determination unit 106. Current restriction determination unit 106 initially computes effective values Iuvmag, Ivwmag, and Iwumag representing magnitude of respective arm currents Iuv, Ivw, and Iwu. Instead of the effective value, another indicator representing magnitude may be employed.

Specifically, effective value Iuvmag of arm current Iuv is calculated by filtering a value calculated by raising arm current Iuv to the second power with a moving-average filter at a frequency two times as high as an AC system frequency, multiplying the value by two, and taking a square root of the result of multiplication. Similarly, effective value Ivwmag of arm current Ivw is calculated by filtering a value calculated by raising arm current Ivw to the second power with the moving-average filter at the frequency two times as high as the AC system frequency, multiplying the value by two, and taking a square root of the result of multiplication. Effective value Iwumag of arm current Iwu is calculated by filtering a value calculated by raising arm current Iwu to the second power with the moving-average filter at the frequency two times as high as the AC system frequency, multiplying the value by two, and taking a square root of the result of multiplication.

Furthermore, current restriction determination unit 106 determines a maximum value Imagmax of the effective values of the arm currents computed above. Current restriction determination unit 106 sets a current restriction flag limitflg to 1 when maximum value Imagmax of the effective value of the arm current is equal to or larger than allowable current maximum value Imax. Current restriction determination unit 106, on the other hand, sets current restriction flag limitflg to 0 when maximum value Imagmax of the effective value of the arm current is smaller than allowable current maximum value Imax.

Multiplication unit 109 computes a current restriction amount Ilimit by multiplying magnitude Inmag of the negative-sequence current command value by current restriction flag limitflg. Multiplication unit 109 outputs calculated current restriction amount Ilimit to positive-sequence reactive current restriction unit 102.

Positive-sequence reactive current command value Id*, allowable current maximum value Imax, and current restriction amount Ilimit are inputted to positive-sequence reactive current restriction unit 102. Positive-sequence reactive current restriction unit 102 computes an upper limit value Uplmt of the positive-sequence reactive current command in accordance with the following expression (3A) based on allowable current maximum value Imax and current restriction amount Ilimit and computes a lower limit value Lowlmt of the positive-sequence reactive current command in accordance with an expression (3B). In other words, upper limit value Uplmt is a value calculated by subtracting current restriction amount Ilimit (which is equal to magnitude Inmag of the negative-sequence current command value when current restriction flag limitflg is set to 1) from allowable current maximum value Imax. Lower limit value Lowlmt is a value obtained by inversion of the sign of upper limit value Uplmt.

[Math. 3]

$$\text{Uplmt} = \text{Imax} - \text{Ilimit} \qquad \cdots(3A)$$

$$\text{Lowlmt} = -(\text{Imax} - \text{Ilimit}) \qquad \cdots(3B)$$

When maximum value Imagmax of the effective value of the arm current is equal to or larger than allowable current maximum value Imax, that is, the effective value of the arm current of any phase is equal to or larger than allowable current maximum value Imax, positive-sequence reactive current restriction unit 102 restricts positive-sequence reactive current command value Id* within a range from lower limit value Lowlmt to upper limit value Uplmt in accordance with magnitude Inmag of the negative-sequence current command value. Positive-sequence reactive current restriction unit 102 outputs a restricted positive-sequence reactive current command value Idl*.

When maximum value Imagmax of the effective value of the arm current is smaller than allowable current maximum value Imax, that is, the effective value of the arm current of any phase is smaller than allowable current maximum value Imax, on the other hand, current restriction amount Ilimit is 0. In this case, lower limit value Lowlmt of the positive-sequence reactive current command is -Imax and upper limit value Uplmt of the positive-sequence reactive current command is Imax. Therefore, positive-sequence reactive current restriction unit 102 restricts positive-sequence reactive current command value Id* within a range from -Imax to Imax and outputs restricted positive-sequence reactive current command value Idl*.

Addition unit 107a generates a reactive current command value Id2* by adding positive-sequence reactive current command value Idl* and negative-sequence reactive current command value Idn*. Addition unit 107b generates an active current command value Iq2* by adding positive-sequence active current command value Iq* and negative-sequence active current command value Iqn*.

Three-phase/two-phase coordinate transformation unit 104 computes a positive-sequence reactive current Id and a positive-sequence active current Iq obtained by three-phase/two-phase conversion of output currents Iu, Iv, and Iw on the positive-sequence coordinate system. In other words, three-phase/two-phase coordinate transformation unit 104 subjects output currents Iu, Iv, and Iw to three-phase/two-phase conversion to output currents I$\alpha$ and I$\beta$ on the $\alpha\beta$ coordinate from the UVW coordinate, in accordance with the following expression (4A). Three-phase/two-phase coordinate transformation unit 104 further performs rotation coordinate transformation from output currents I$\alpha$ and I$\beta$ on the $\alpha\beta$ coordinate to the positive-sequence dq coordinate in accordance with the following expression (4B), with the use of reference phase $\theta$. Reference phase $\theta$ is phase $\theta$ in synchronization with the system voltage.

[Math. 4]

$$\begin{bmatrix} I\alpha \\ I\beta \\ Iz \end{bmatrix} = \frac{2}{3}\begin{bmatrix} 1 & -1/2 & -1/2 \\ 0 & \sqrt{3}/2 & -\sqrt{3}/2 \\ 1/2 & 1/2 & 1/2 \end{bmatrix}\begin{bmatrix} Iu \\ Iv \\ Iw \end{bmatrix} \qquad \cdots(4A)$$

$$\begin{bmatrix} Id \\ Iq \end{bmatrix} = \begin{bmatrix} \cos\theta & \sin\theta \\ -\sin\theta & \cos\theta \end{bmatrix}\begin{bmatrix} I\alpha \\ I\beta \end{bmatrix} \qquad \cdots(4B)$$

Subtraction unit 108a computes an error $\Delta$Id between reactive current command value Id2* and positive-sequence reactive current Id outputted from three-phase/two-phase coordinate transformation unit 104. Subtraction unit 108b computes an error $\Delta$Iq between active current command value Iq2* and positive-sequence active current Iq outputted from three-phase/two-phase coordinate transformation unit 104.

Controller 103 performs feedback control computation to set errors $\Delta$Id and $\Delta$Iq computed by subtraction units 108a and 108b to zero, that is, to have positive-sequence reactive current Id and positive-sequence active current Iq follow current command values Id2* and Iq2*, respectively. Consequently, controller 103 generates and outputs an output voltage command value Vd* for reactive current control and an output voltage command value Vq* for active power control. Controller 103 may be implemented, for example, by a PI controller or another controller.

When magnitude of the effective value of the arm current of any phase becomes equal to or larger than allowable current maximum value Imax, output current control unit 25 thus controls power converter 2 such that the negative-sequence current preferentially flows by restricting the positive-sequence reactive current command value in accordance with magnitude of the negative-sequence current command value. Thus, the power converter can be prevented from being overloaded and voltages of the phases of the power converter can be balanced.

[Voltage Command Value Computing Unit 26]

Referring again to Fig. 4, voltage command value computing unit 26 receives voltage command value Vd* on the d axis and voltage command value Vq* on the q axis outputted from output current control unit 25 and subjects voltage command values Vd* and Vq* to two-phase/three-phase change, to obtain AC voltage command values Vu*, Vv*, and Vw* of respective phases (the U phase, the V phase, and the W phase). Two-phase/three-phase conversion can be realized as reverse conversion of three-phase/two-phase conversion. Specifically, voltage command value computing unit 26 transforms the dq coordinate to the $\alpha\beta$ coordinate and then transforms the $\alpha\beta$ coordinate to a three-phase coordinate.

Voltage command value computing unit 26 computes output voltage command values Vuo*, Vvo*, and Vwo* of the respective phases by adding zero-sequence voltage command value Vz* outputted from circulating current control unit 23 to calculated voltage command values Vu*, Vv*, and Vw* of the respective phases.

[Gate Signal Generator 27]

Referring to Fig. 4, gate signal generator 27 generates a gate signal G for on and off control of each semiconductor switching element 8 in each converter cell 6 in each arm under pulse width modulation (PWM) control in accordance with output voltage command values Vuo*, Vvo*, and Vwo* of the respective phases outputted from voltage command value computing unit 26. Gate signal G from gate signal generator 27 is inputted to each semiconductor switching element 8 in each converter cell 6.

[Summary and Effects of First Embodiment]

As set forth above, in control device 3 of power conversion device 1 in the first embodiment, AC voltage control unit 24 computes positive-sequence reactive current command value Id* based on detection values of AC voltages Vu, Vv, and Vw of AC power system 12. DC voltage control unit 20 computes positive-sequence active current command value Iq* based on representative value Vdc_p of the voltages of power storage elements 7 in each converter cell 6 included in power converter 2. Phase balance control unit 21 generates respective arm current command values Iuv*, Ivw*, and Iwu* for the plurality of arms A1 to A3 in order to suppress imbalance among the voltages of power storage elements 7 among the plurality of arms A1 to A3. Ngative-sequence current command value computing unit 22 computes a first negative-sequence reactive current command value Idn* and a first negative-sequence active current command value Iqn* based on arm current command values Iuv*, Ivw*, and Iwu*. Output current control unit 25 controls AC currents Iu, Iv, and Iw of AC power system 12 based on positive-sequence reactive current command value Id*, positive-sequence active current command value Iq*, first negative-sequence reactive current command value Idn*, and first negative-sequence active current command value Iqn*. When magnitude Iuvmag, Ivwmag, and Iwumag of the effective values of the arm currents that flow through the plurality of arms A1 to A3, respectively, is equal to or larger than allowable current maximum value Imax, output current control unit 25 restricts positive-sequence reactive current command value Id* as compared with that when magnitude of the effective value of the arm current is smaller than the allowable current maximum value. Consequently, the positive-sequence reactive current (Id) is restricted.

Specifically, output current control unit 25 computes magnitude Inmag of a first negative-sequence current command value based on first negative-sequence reactive current command value Idn* and first negative-sequence active current command value Iqn*. When magnitude of the effective value of the arm current is equal to or larger than the allowable current maximum value, output current control unit 25 restricts positive-sequence reactive current command value Id* to a larger extent as magnitude Inmag of the first negative-sequence current command value is larger. By way of example, output current control unit 25 restricts positive-sequence reactive current command value Id*, with a value calculated by subtracting magnitude Inmag of the first negative-sequence current command value from allowable current maximum value Imax being defined as upper limit value Uplmt and a value obtained by inversion of the sign of upper limit value Uplmt being defined as lower limit value Lowlmt.

Output current control unit 25 computes reactive current command value Id2* by adding first negative-sequence reactive current command value Idn* to positive-sequence reactive current command value Idl*, magnitude of which is restricted. Output current control unit 25 controls positive-sequence reactive current Id based on detection values of AC currents Iu, Iv, and Iw of AC power system 12 to follow reactive current command value Id2*.

As set forth above, when magnitude Iuvmag, Ivwmag, or Iwumag of the effective value of the arm current of any phase becomes equal to or larger than allowable current maximum value Imax, control device 3 in power conversion device 1 in the first embodiment controls power converter 2 such that the negative-sequence current preferentially flows, by restricting positive-sequence reactive current command value Id* in accordance with magnitude Inmag of the negative-sequence current command value for phase balancing. MMC type power converter 2 can thus be prevented from being overloaded and capacitor voltages Vcap of the phases of power converter 2 can be balanced. Therefore, continuity of operations of power converter 2 can be enhanced.

Second Embodiment.

An example in which the positive-sequence reactive current command value is restricted in accordance with magnitude of the negative-sequence current command value for phase balancing is shown in the first embodiment. In a second embodiment, an example in which control for compensation for the negative-sequence voltage for lessening imbalance in system voltage is added to control in the first embodiment will be described.

Generally, a power conversion device in the second embodiment extracts an imbalance component (negative-sequence voltage) of the AC power system and feeds a current for compensation for the extracted negative-sequence voltage to the AC power system so as to lessen imbalance in system voltage. What is noted here is that, as magnitude of a compensation current increases with increase in negative-sequence voltage of the power system, balance among the phases of the capacitor voltages of the MMC tends to be lost. In particular, in the event of a system fault where the negative-sequence voltage is large, imbalance among the phases of the capacitor voltages is noticeable.

A control device in the present embodiment performs negative-sequence voltage compensation when such a state that imbalance is determined as being less based on comparison of an evaluation value associated with a degree of imbalance in AC voltage of the AC power system with a threshold value lasts for a certain time period or longer. The system voltage can thus be stabilized by negative-sequence voltage compensation while imbalance among the phases of the capacitor voltages is prevented.

[Schematic Configuration of Power Conversion Device]

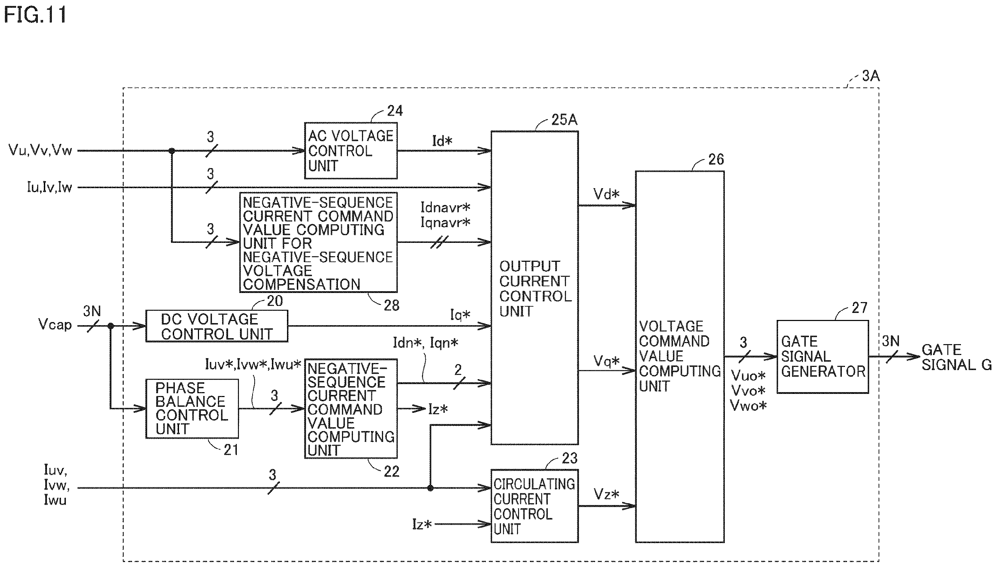

Fig. 11 is a block diagram showing an exemplary configuration of a control device 3A in the power conversion device in the second embodiment.

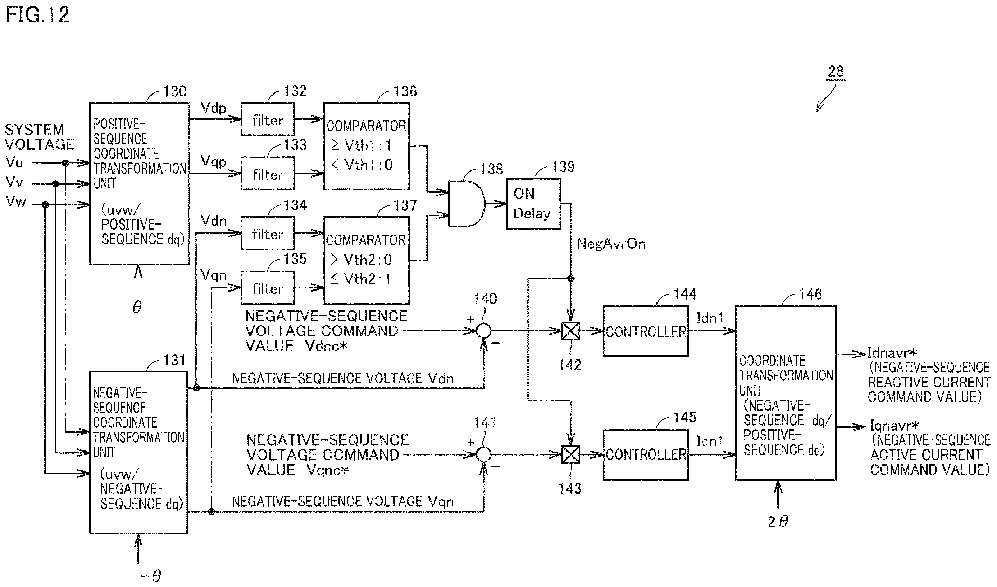

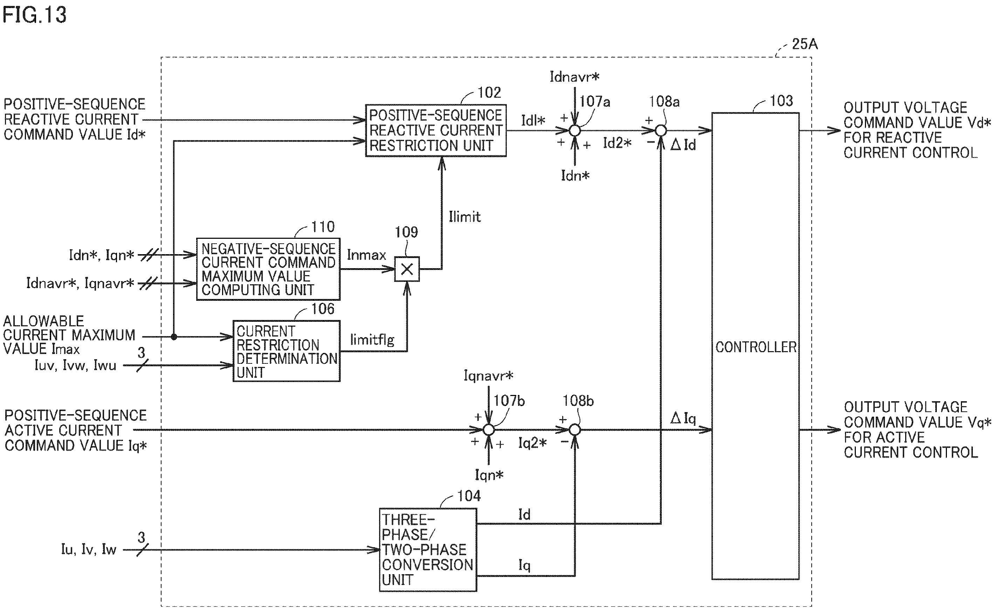

Control device 3A in Fig. 11 is different from control device 3 in Fig. 4 in further including a negative-sequence current command value computing unit 28 for negative-sequence voltage compensation. Furthermore, in control device 3A in Fig. 11, operations by an output current control unit 25A are different from operations by output current control unit 25 in Fig. 4. The above points which are differences from the first embodiment will mainly be described below with reference to Figs. 12 and 13, and features in common to the first embodiment have the same reference characters allotted and description thereof will not be repeated.

Negative-sequence current command value computing unit 28 for negative-sequence voltage compensation operates when such a state that imbalance in AC voltage of the AC power system is determined as being less lasts for a certain time period or longer. Negative-sequence current command value computing unit 28 does not operate when imbalance in AC voltage of the AC power system is determined as being great.

[Negative-sequence Current Command Value Computing Unit 28 for Negative-sequence Voltage Compensation]

Fig. 12 is a block diagram showing an exemplary configuration of negative-sequence current command value computing unit 28 for negative-sequence voltage compensation shown in Fig. 11. Negative-sequence current command value computing unit 28 for negative-sequence voltage compensation includes a positive-sequence coordinate transformation unit 130, a negative-sequence coordinate transformation unit 131, filters 132 to 135, comparators 136 and 137, an AND circuit 138, an on delay circuit 139, subtractors 140 and 141, multipliers 142 and 143, controllers 144 and 145, and a coordinate transformation unit 146. Operations by each constituent element of negative-sequence current command value computing unit 28 for negative-sequence voltage compensation will be described below with reference to Fig. 12.

Positive-sequence coordinate transformation unit 130 receives input of system voltages Vu, Vv, and Vw detected by AC voltage detector 15. Positive-sequence coordinate transformation unit 130 performs three-phase/two-phase conversion (UVW/$\alpha\beta$ conversion) of the detection values of system voltages Vu, Vv, and Vw from the UVW coordinate into the $\alpha\beta$ coordinate in accordance with an expression (5A). Positive-sequence coordinate transformation unit 130 substitutes system voltages V$\alpha$ and V$\beta$ on the $\alpha\beta$ coordinate obtained by three-phase/two-phase conversion into an expression (5B) to perform rotation coordinate transformation ($\alpha\beta$/dq conversion) from the $\alpha\beta$ coordinate into the dq coordinate based on reference phase $\theta$ of the AC system voltage. Positive-sequence voltages Vdp and Vqp are thus obtained.

[Math. 5]

$$\begin{bmatrix} V\alpha \\ V\beta \\ Vz \end{bmatrix} = \frac{2}{3}\begin{bmatrix} 1 & -1/2 & -1/2 \\ 0 & \sqrt{3}/2 & -\sqrt{3}/2 \\ 1/2 & 1/2 & 1/2 \end{bmatrix}\begin{bmatrix} Vu \\ Vv \\ Vw \end{bmatrix} \quad \cdots(5A)$$

$$\begin{bmatrix} Vdp \\ Vqp \end{bmatrix} = \begin{bmatrix} \cos\theta & \sin\theta \\ -\sin\theta & \cos\theta \end{bmatrix}\begin{bmatrix} V\alpha \\ V\beta \end{bmatrix} \quad \cdots(5B)$$

Negative-sequence coordinate transformation unit 131 receives input of the detection values of system voltages Vu, Vv, and Vw. Negative-sequence coordinate transformation unit 131 performs three-phase/two-phase conversion (UVW/$\alpha\beta$ conversion) of the detection values of system voltages Vu, Vv, and Vw from the UVW coordinate to the $\alpha\beta$ coordinate in accordance with the expression (5A). Negative-sequence coordinate transformation unit 131 substitutes system voltages Vα and Vβ on the αβ coordinate obtained by three-phase/two-phase conversion into an expression (6) to perform rotation coordinate transformation (αβ/dq conversion) from the αβ coordinate to the dq coordinate based on a reverse phase -θ of the reference phase of the AC system voltage. Negative-sequence voltages Vdn and Vqn are thus obtained.

[Math. 6]

$$\begin{bmatrix} Vdn \\ Vqn \end{bmatrix} = \begin{bmatrix} \cos(-\theta) & \sin(-\theta) \\ -\sin(-\theta) & \cos(-\theta) \end{bmatrix} \begin{bmatrix} V\alpha \\ V\beta \end{bmatrix} \qquad \cdots(6)$$

Positive-sequence voltages Vdp and Vqp and negative-sequence voltages Vdn and Vqn obtained by computation above have a frequency component of 2f (f representing a system frequency). Therefore, filters 132 to 135 remove a 2f component.

Comparator 136 computes magnitude |Vp| of the positive-sequence voltage in accordance with an expression (7) by using positive-sequence voltages Vdp and Vqp from which the 2f frequency component has been removed by filters 132 and 133. Comparator 136 compares obtained magnitude |Vp| of the positive-sequence voltage with a first threshold value Vth1, and outputs 1 when magnitude |Vp| of the positive-sequence voltage is equal to or larger than first threshold value Vth1. Comparator 136 outputs 0 when magnitude |Vp| of the positive-sequence voltage is smaller than first threshold value Vth1. Since comparator 136 is assumed to determine whether or not the system voltage has a value in a steady state, first threshold value Vth1 is a value, for example, equal to or larger than 0.9 pu.

[Math. 7]

$$|Vp| = \sqrt{Vdp^2 + Vqp^2} \qquad \cdots(7)$$

Comparator 137, on the other hand, computes magnitude |Vn| of the negative-sequence voltage in accordance with an expression (8) by using negative-sequence voltages Vdn and Vqn from which the 2f frequency component has been removed by filters 134 and 135. Comparator 137 compares obtained magnitude |Vn| of the negative-sequence voltage with a second threshold value Vth2, and outputs 1 when magnitude |Vn| of the negative-sequence voltage is equal to or smaller than second threshold value Vth2. Comparator 137 outputs 0 when magnitude |Vn| of the negative-sequence voltage is larger than second threshold value Vth2. Since comparator 137 is assumed to determine whether or not the system voltage has a value in the steady state, second threshold value Vth2 is a value, for example, equal to or smaller than 0.05 pu.

[Math. 8]

$$|Vn| = \sqrt{Vdn^2 + Vqn^2} \qquad \cdots(8)$$

A result of comparison by comparators 136 and 137 is inputted to AND circuit 138. When a time period set in on delay circuit 139 elapses while values inputted from comparators 136 and 137 to AND circuit 138 are both 1, a flag NegAvrOn for on/off switching of negative-sequence voltage compensation is set to 1. The time period set in on delay circuit 139 is set, for example, to a value equal to or larger than 0.1 [s] in order to avoid activation of negative-sequence voltage compensation at the time when a system imbalanced state instantaneously occurs.

According to the configuration above, when a state in which the system voltage is normal continues for a certain time period, flag NegAvrOn for on/off switching of negative-sequence voltage control is set to 1 and negative-sequence voltage compensation is activated. When imbalance in system voltage is great as in a system fault, on the other hand, negative-sequence voltage compensation is immediately deactivated.

Subtractor 140 computes a difference between a negative-sequence voltage command value Vdnc* (typically equal to 0) for negative-sequence voltage compensation of the power system and negative-sequence voltage Vdn. Multiplier 142 multiplies a result of computation of this difference by a value of flag NegAvrOn. Therefore, when flag NegAvrOn is set to 1, controller 144 generates a negative-sequence voltage compensation current Idn1 by performing control computation to set the result of computation of the difference to zero, that is, to have negative-sequence voltage Vdn follow negative-sequence voltage command value Vdnc* (= 0). A PI controller or another controller may be employed as controller 144.

Similarly, subtractor 141 computes a difference between a negative-sequence voltage command value Vqnc* (typically equal to 0) for negative-sequence voltage compensation of the power system and negative-sequence voltage Vqn. Multiplier 143 multiplies a result of computation of this difference by the value of flag NegAvrOn. Therefore, when NegAvrOn is set to 1, PI controller 145 generates a negative-sequence voltage compensation current Iqn1 by performing control computation to set the result of computation of the difference to zero, that is, to have negative-sequence voltage Vqn follow negative-sequence voltage command value Vqnc* (= 0). Controller 145 may be a PI controller or another controller. In negative-sequence current command value computing unit 28 for negative-sequence voltage compensation, negative-sequence voltage control is carried out on negative-sequence dq axes as above.

As expressed in an expression (9), coordinate transformation unit (negative-sequence dq/positive-sequence dq) 146 transforms the coordinate of negative-sequence voltage compensation currents Idnl and Iqn1 from a coordinate on the negative-sequence dq axes to a coordinate on the positive-sequence dq axes by rotation coordinate transformation using a phase two times (that is, 20) as large as reference phase θ of the AC system voltage. As a result of this coordinate transformation, coordinate transformation unit 146 generates a negative-sequence reactive current command value Idnavr* and a negative-sequence active current command value Iqnavr* for negative-sequence voltage compensation and outputs them to output current control unit 25A.

[Math. 9]

$$\begin{bmatrix} \text{Idnavr} * \\ \text{Iqnavr} * \end{bmatrix} = \begin{bmatrix} \cos(2_\theta) & \sin(2_\theta) \\ -\sin(2_\theta) & \cos(2_\theta) \end{bmatrix} \begin{bmatrix} \text{Idn1} \\ \text{Iqn1} \end{bmatrix} \qquad \cdots (9)$$

[Output Current Control Unit 25A]

Fig. 13 is a block diagram showing an exemplary configuration of output current control unit 25A in Fig. 11. As shown in Fig. 13, output current control unit 25A includes a negative-sequence current command maximum value computing unit 110, positive-sequence reactive current restriction unit 102, controller 103, three-phase/two-phase coordinate transformation unit 104, current restriction determination unit 106, addition units 107a and 107b, subtraction units 108a and 108b, and multiplication unit 109.

Output current control unit 25A in Fig. 13 is different from output current control unit 25 in Fig. 10 in including negative-sequence current command maximum value computing unit 110 instead of negative-sequence current command magnitude computing unit 101.

Specifically, negative-sequence reactive current command value Idn* and negative-sequence active current command value Iqn* for phase balancing outputted from negative-sequence current command value computing unit 22 and negative-sequence reactive current command value Idnavr* and negative-sequence active current command value Iqnavr* outputted from negative-sequence current command value computing unit 28 for negative-sequence voltage compensation are inputted to negative-sequence current command maximum value computing unit 110.

Maximum value computing unit 110 computes magnitude Inmag of the negative-sequence current command value in accordance with the expression (2) described in the first embodiment. Furthermore, maximum value computing unit 110 computes magnitude Inavrmag of the negative-sequence current command value for negative-sequence voltage compensation in accordance with an expression (10).

[Math. 10]

$$\text{Inavrmag} = \sqrt{\text{Idnavr} *^2 + \text{Iqnavr} *^2} \qquad \cdots (10)$$

Maximum value computing unit 110 outputs to multiplication unit 109, larger one of magnitude Inmag of the negative-sequence current command value for phase balancing and magnitude Inavrmag of the negative-sequence current command value for negative-sequence voltage compensation, as a maximum value Inmax of the negative-sequence current command value.

As described with reference to Fig. 10, arm currents Iuv, Ivw, and Iwu detected by arm current detectors 13 and allowable current maximum value Imax are inputted to current restriction determination unit 106. Current restriction determination unit 106 computes effective values Iuvmag, Ivwmag, and Iwumag of respective arm currents Iuv, Ivw, and Iwu and determines maximum value Imagmax of the effective values of the computed arm currents. When maximum value Imagmax of the effective value of the arm current is equal to or larger than allowable current maximum value Imax, current restriction determination unit 106 then sets current restriction flag limitflg to 1. When maximum value Imagmax of the effective value of the arm current is smaller than allowable current maximum value Imax, on the other hand, current restriction determination unit 106 sets current restriction flag limitflg to 0.

Multiplication unit 109 computes current restriction amount Ilimit by multiplying maximum value Inmax of the negative-sequence current command value by current restriction flag limitflg. Multiplication unit 109 outputs calculated current restriction amount Ilimit to positive-sequence reactive current restriction unit 102.

As described with reference to Fig. 10, positive-sequence reactive current command value Id*, allowable current maximum value Imax, and current restriction amount Ilimit are inputted to positive-sequence reactive current restriction unit 102. Positive-sequence reactive current restriction unit 102 computes upper limit value Uplmt of the positive-sequence reactive current command in accordance with the expression (3A) described previously and computes lower limit value Lowlmt of the positive-sequence reactive current command in accordance with the expression (3B) described previously, based on allowable current maximum value Imax and current restriction amount Ilimit. In other words, upper limit value Uplmt is a value calculated by subtracting current restriction amount Ilimit (which is equal to maximum value Inmax of the negative-sequence current command value when current restriction flag limitflg is set to 1) from allowable current maximum value Imax. Lower limit value Lowlmt is a value obtained by inversion of the sign of upper limit value Uplmt.

When maximum value Imagmax of the effective value of the arm current is equal to or larger than allowable current maximum value Imax, positive-sequence reactive current restriction unit 102 restricts positive-sequence reactive current command value Id* within the range from lower limit value Lowlmt to upper limit value Uplmt in accordance with maximum value Inmax of the negative-sequence current command value. When maximum value Imagmax of the effective value of the arm current is smaller than allowable current maximum value Imax, on the other hand, current restriction amount Ilimit is set to 0. In this case, positive-sequence reactive current restriction unit 102 restricts positive-sequence reactive current command value Id* within the range from -Imax to Imax. Positive-sequence reactive current restriction unit 102 outputs restricted positive-sequence reactive current command value Idl* to addition unit 107a.

Addition unit 107a generates reactive current command value Id2* by adding positive-sequence reactive current command value Idl*, negative-sequence reactive current command value Idn* for phase balancing, and negative-sequence reactive current command value Idnavr* for negative-sequence voltage compensation. Addition unit 107b generates active current command value Iq2* by adding positive-sequence active current command value Iq*, negative-sequence active current command value Iqn* for phase balancing, and negative-sequence active current command value Iqnavr* for negative-sequence voltage compensation.

As described with reference to Fig. 10, three-phase/two-phase coordinate transformation unit 104 computes positive-sequence reactive current Id and positive-sequence active current Iq obtained by three-phase/two-phase conversion of output currents Iu, Iv, and Iw on the positive-sequence coordinate system. Subtraction unit 108a computes error ΔId between reactive current command value Id2* and positive-sequence reactive current Id outputted from three-phase/two-phase coordinate transformation unit 104. Subtraction unit 108b computes error ΔIq between active current command value Iq2* and positive-sequence active current Iq outputted from three-phase/two-phase coordinate transformation unit 104.

As described with reference to Fig. 10, controller 103 performs feedback control computation such that errors ΔId and ΔIq computed by subtraction units 108a and 108b are set to zero, that is, such that positive-sequence reactive current Id and positive-sequence active current Iq follow current command values Id2* and Iq2*, respectively. Consequently, controller 103 generates and outputs output voltage command value Vd* for reactive current control and output voltage command value Vq* for active power control.

[Summary and Effects of Second Embodiment]

As set forth above, control device 3A of the power conversion device in the second embodiment further includes second negative-sequence current command value computing unit 28. Second negative-sequence current command value computing unit 28 computes a second negative-sequence reactive current command value Idnavr* and a second negative-sequence active current command value Iqnavr* so as to compensate for negative-sequence voltages Vdn and Vqn included in AC voltages Vu, Vv, and Vw of AC power system 12. Output current control unit 25A controls AC currents Iu, Iv, and Iw of AC power system 12 further based on second negative-sequence reactive current command value Idnavr* and second negative-sequence active current command value Iqnavr*.

Specifically, output current control unit 25A computes magnitude Inmag of the first negative-sequence current command value based on first negative-sequence reactive current command value Idn* and first negative-sequence active current command value Iqn* and computes magnitude Inavrmag of the second negative-sequence current command value based on second negative-sequence reactive current command value Idnavr* and second negative-sequence active current command value Iqnavr*. Output current control unit 25A determines large one of magnitude Inmag of the first negative-sequence current command value and magnitude Inavrmag of the second negative-sequence current command value, as maximum value Inmax of the negative-sequence current command value. When magnitude Iuvmag, Ivwmag, or Iwumag of the effective value of the arm current is equal to or larger than allowable current maximum value Imax, output current control unit 25A restricts positive-sequence reactive current command value Id* to a larger extent as maximum value Inmax of the negative-sequence current command value is larger. By way of example, output current control unit 25A restricts positive-sequence reactive current command value Id*, with a value calculated by subtracting maximum value Inmax of the negative-sequence current command value from allowable current maximum value Imax being defined as upper limit value Uplmt and a value obtained by inversion of the sign of upper limit value Uplmt being defined as lower limit value Lowlmt.

Output current control unit 25A computes reactive current command value Id2* by adding first negative-sequence reactive current command value Idn* and second negative-sequence reactive current command value Idnavr* to positive-sequence reactive current command value Idl*, magnitude of which is restricted. Output current control unit 25A controls positive-sequence reactive current Id based on detection values of AC currents Iu, Iv, and Iw of AC power system 12 to follow reactive current command value Id2*.

As set forth above, control device 3A in the power conversion device in the second embodiment controls power converter 2 such that the negative-sequence current preferentially flows, by restricting positive-sequence reactive current command value Id* in accordance with maximum value Inmax of the negative-sequence current command value for negative-sequence voltage compensation and phase balancing when magnitude Iuvmag, Ivwmag, or Iwumag of the effective value of the arm current of any phase becomes equal to or larger than allowable current maximum value Imax. Since imbalance in system voltage can be lessened while power converter 2 is prevented from being overloaded and capacitor voltages Vcap are prevented from becoming imbalanced among the phases, continuity of operations of power converter 2 can be enhanced.

It should be understood that each embodiment disclosed herein is illustrative and non-restrictive in every respect. Each embodiment can freely be combined or can be modified or omitted as appropriate, within the scope of the present disclosure. Though each embodiment shows an exemplary delta-connected MMC type power conversion device, the present disclosure is applicable also to a star-connected MMC type power conversion device and a double-star-connected MMC type power conversion device.

The scope of this application is defined by the terms of the claims rather than the description above and is intended to include any modifications within the scope and meaning equivalent to the terms of the claims.

REFERENCE SIGNS LIST

1 power conversion device; 2 power converter; 3, 3A control device; 4 transformer; 5 reactor; 6 converter cell; 7 power storage element; 8 semiconductor switching element; 9 rectification element; 10F full-bridge circuit; 10H half-bridge circuit; 11 voltage detector; 12 AC power system; 13 arm current detector; 14 AC current detector; 15 AC voltage detector; 20 DC voltage control unit; 21 phase balance control unit; 22, 28 negative-sequence current command value computing unit; 23 circulating current control unit; 24 AC voltage control unit; 25, 25A output current control unit; 26 voltage command value computing unit; 27 gate signal generator; 31 all-voltage representative value computing unit; 33, 58 to 60, 84, 93, 103, 144, 145 controller; 51 voltage computing unit; 70, 104 three-phase/two-phase coordinate transformation unit; 71, 72, 132 to 135 filter; 91 positive-sequence voltage detector; 101 negative-sequence voltage command magnitude computing unit; 102 positive-sequence reactive current restriction unit; 106 current restriction determination unit; 110 negative-sequence current command maximum value computing unit; 130 positive-sequence coordinate transformation unit; 131 negative-sequence coordinate transformation unit; 136, 137 comparator; 138 AND circuit; 139 on delay circuit; 146 coordinate transformation unit; A1, A2, A3 arm; P1, P2 input and output terminal.

**Claims**

1. A power conversion device connected to an AC power system, the power conversion device comprising:

   a power converter comprising a plurality of arms; and
   a control device to control the power converter, wherein
   each of the arms comprises a plurality of cascaded converter cells,
   each of the converter cells comprises:

   a pair of input and output terminals;
   a plurality of semiconductor switching elements; and
   a power storage element connected to the pair of input and output terminals with the plurality of semiconductor switching elements being interposed,

   the control device comprises:

   an AC voltage control unit to compute a positive-sequence reactive current command value based on a detection value of an AC voltage of the AC power system,;
   a DC voltage control unit to compute a positive-sequence active current command value based on a representative value of voltages of power storage elements in the converter cells which implement the power converter;
   a phase balance control unit to generate respective arm current command values for the plurality of arms for suppression of imbalance among the voltages of the power storage elements among the plurality of arms;
a first negative-sequence current command value computing unit to compute a first negative-sequence reactive current command value and a first negative-sequence active current command value based on the arm current command values; and

an output current control unit to control an AC current of the AC power system based on the positive-sequence reactive current command value, the positive-sequence active current command value, the first negative-sequence reactive current command value, and the first negative-sequence active current command value, and

when magnitude of arm currents that flow through the plurality of arms, respectively, is equal to or larger than an allowable current maximum value, the output current control unit restricts a positive-sequence reactive current, as compared with the positive-sequence reactive current when magnitude of the arm currents is smaller than the allowable current maximum value.

2. The power conversion device according to claim 1, wherein

the output current control unit computes magnitude of a first negative-sequence current command value based on the first negative-sequence reactive current command value and the first negative-sequence active current command value, and

when magnitude of the arm currents is equal to or larger than the allowable current maximum value, the output current control unit restricts the positive-sequence reactive current command value to a larger extent as magnitude of the first negative-sequence current command value is larger.

3. The power conversion device according to claim 2, wherein
the output current control unit restricts the positive-sequence reactive current command value, with a value calculated by subtracting magnitude of the first negative-sequence current command value from the allowable current maximum value being defined as an upper limit value and a value obtained by inversion of a sign of the upper limit value being defined as a lower limit value.

4. The power conversion device according to any one of claims 1 to 3, wherein

the output current control unit computes a reactive current command value by adding the first negative-sequence reactive current command value to the positive-sequence reactive current command value, magnitude of which is restricted, and

the output current control unit controls a positive-sequence reactive current based on the detection value of the AC current of the AC power system to follow the reactive-current command value.

5. The power conversion device according to claim 1, further comprising a second negative-sequence current command value computing unit to compute a second negative-sequence reactive current command value and a second negative-sequence active current command value to compensate for a negative-sequence voltage included in the AC voltage of the AC power system, wherein
the output current control unit controls the AC current of the AC power system further based on the second negative-sequence reactive current command value and the second negative-sequence active current command value.

6. The power conversion device according to claim 5, wherein

the output current control unit computes magnitude of a first negative-sequence current command value based on the first negative-sequence reactive current command value and the first negative-sequence active current command value, computes magnitude of a second negative-sequence current command value based on the second negative-sequence reactive current command value and the second negative-sequence active current command value, and determines larger one of magnitude of the first negative-sequence current command value and magnitude of the second negative-sequence current command value, as a maximum value of a negative-sequence current command value, and

when magnitude of the arm currents is equal to or larger than the allowable current maximum value, the output current control unit restricts the positive-sequence reactive current command value to a larger extent as the maximum value of the negative-sequence current command value is larger.

7. The power conversion device according to claim 6, wherein

the output current control unit restricts the positive-sequence reactive current command value, with a value calculated by subtracting the maximum value of the negative-sequence current command value from the allowable current maximum value being defined as an upper limit value and a value obtained by inversion of a sign of the upper limit value being defined as a lower limit value.

8. The power conversion device according to any one of claims 5 to 7, wherein

the output current control unit computes a reactive current command value by adding the first negative-sequence reactive current command value and the second negative-sequence reactive current command value to the positive-sequence reactive current command value, magnitude of which is restricted, and
the output current control unit controls a positive-sequence reactive current based on the detection value of the AC current of the AC power system to follow the reactive current command value.

FIG.1

EP 4 682 669 A1

FIG.2

FIG.3

FIG.4

EP 4 682 669 A1

FIG.5

FIG.6

FIG.7

FIG.8

FIG.9

FIG.10

FIG.11

EP 4 682 669 A1

FIG.12

EP 4 682 669 A1

FIG.13

## INTERNATIONAL SEARCH REPORT

| International application No. |
| --- |
| **PCT/JP2023/010304** |

| A. | CLASSIFICATION OF SUBJECT MATTER |
| --- | --- |

*G05F 1/70*(2006.01)i; *H02M 7/48*(2007.01)i; *H02M 7/49*(2007.01)i
FI:    G05F1/70; H02M7/48 R; H02M7/48 M; H02M7/49

According to International Patent Classification (IPC) or to both national classification and IPC

| B. | FIELDS SEARCHED |
| --- | --- |

Minimum documentation searched (classification system followed by classification symbols)

G05F1/70; H02M7/48; H02M7/49

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2015-108967 A (KABUSHIKI KAISHA TOSHIBA) 11 June 2015 (2015-06-11)<br>entire text, all drawings | 1-8 |
| A | WO 2015/102060 A1 (MITSUBISHI ELECTRIC CORPORATION) 09 July 2015 (2015-07-09)<br>entire text, all drawings | 1-8 |
| A | JP 6818191 B1 (MITSUBISHI ELECTRIC CORPORATION) 20 January 2021 (2021-01-20)<br>entire text, all drawings | 1-8 |
| A | JP 2013-251933 A (HITACHI, LTD.) 12 December 2013 (2013-12-12)<br>entire text, all drawings | 1-8 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **26 May 2023** | **06 June 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/010304**

| Patent document cited in search report | | | Publication date (day/month/year) | Patent family member(s) | | | Publication date (day/month/year) |
|---|---|---|---|---|---|---|---|
| JP | 2015-108967 | A | 11 June 2015 | (Family: none) | | | |
| WO | 2015/102060 | A1 | 09 July 2015 | US | 2016/0336874 | A1 | |
| | | | | entire text, all drawings | | | |
| | | | | EP | 3093977 | A1 | |
| JP | 6818191 | B1 | 20 January 2021 | WO | 2021/255866 | A1 | |
| JP | 2013-251933 | A | 12 December 2013 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2022085101 A